# EUROPEAN PATENT SPECIFICATION

(11) **EP 1 626 217 B1**
(45) Date of publication and mention of the grant of the patent: **20.12.2006**
(21) Application number: 04019192.6
(22) Date of filing: 12.08.2004
(51) Int. Cl.: F16L 15/00, F16L 13/14, F16L 33/207, F16L 41/02

(54) **Method for producing a press connection arrangement, tool for deforming mating threads of a press connection arrangement and press connection arrangement**
Verfahren zur Herstellung einer Pressverbindungsanordnung, Werkzeug zum Verformen ineinandergreifender Gewinde einer Pressverbindungsanordnung und Pressverbindungsanordnung
Méthod pour la production d'un raccord à sertir, outil pour déformer des filets en prises d'un raccord à sertir et raccord à sertir

(43) Date of publication of application: 15.02.2006
(73) Proprietor: Advanced Fluid Connections plc., Seacroft, Leeds LS14 2AQ (GB)
(72) Inventor: Glaze, Alan Richard, Bromsgrove Worcestershire, B63 1EP (GB); Webb, Steven Paul, Tipton West Midlands, DY4 7LX (GB)
(74) Representative: Weber-Bruls, Dorothée

(56) References cited:
- EP-A- 0 507 423
- WO-A-01/50056
- DE-B- 1 007 126
- DE-U- 29 800 861
- GB-A- 1 542 847
- US-A- 5 505 502
- US-B1- 6 481 086

## Description

The present invention refers to a method for producing a press connection arrangement, comprising the steps of: a) connecting a body, which is suited for conditioning a fluid flow within a pipework by re-directing, shutting-off and/or accelerating at least a part of said fluid flow or for providing an adaptation between diameters of different pipework elements, to a socket to form a unit of the body and the socket, b) inserting the end of a tube into at least a part of the unit and c) press-connecting the socket onto the tube in the area of a bead provided by the socket to house a sealing element between the socket and the tube under the formation of indentations to obtain a press connection arrangement being fluid tight.

Such a method is known from EP 0 507 423 B1 referring to the use of a socket in form of a standardized connector for connecting a body in form of a shut-off member of a water and heating plumbing installation to a pipe, like a tube. The connector is connected to the shut-off member via a soldering joint, welding joint or adhesive layer. All three alternatives have the drawback of the necessity of an additional material, namely a soldering material, welding material or adhesive, in order to ensure a secure connection.

From DE 298 00 861 U1 a press connection arrangement is known which comprises a socket detachably connected to a body either by screwing, latching, catching, pressing, squeezing or based on a bayonet connection. Those connections are not sufficiently secure.

US 6,481,086 B1 discloses a method for sealingly interconnecting a pipe with a structure such that the pipe is axially moveable with respect thereto. This structure makes usage of an annular sealing member onto which a body is screwed such that a pipe inserted into said member can be moved axially.

A method for assembling two carcass ends is known from WO 01/50056, each of said ends comprising a wound profile and the end areas of overlapping profiles of the carcass pipes being fixed to each other by the provision of one or more punctiform deformation in the common, overlapping profiles.

It is an object of the invention to further develop the known method for producing a press connection arrangement.

This object is achieved in that step a) further comprises:
a1) screwing a thread of the body onto a thread of the socket and
a2) at least partially deforming the mating threads to create an anti-rotational lock.

With the invention it is proposed that the body and the socket are casted and than machined internally as well as externally.

It is preferred that the threads are machined, in particular the thread of the body being machined on an inner surface of the body and the thread of the socket being machined on an outer surface of the socket.

One embodiment of the invention is characterized in that the free end of the body to be screwed onto the socket is formed with an extension of enhanced internal diameter and adjacent to the extension, extending substantially axially, the thread of the body is formed as an internal thread, the free end of the socket to be screwed into the body is formed with the thread as an external thread and adjacent to the external thread a substantial cylindrical portion, preferably provided with an enhanced external diameter, is bordered by a projection extending substantially radially, and a sealing element, in particular in form of an O-ring, is fitted, preferably onto the cylindrical portion of the socket, prior to the assembly of the body and the socket such that after screwing the body onto the socket the sealing element creates seal between the body and the socket, in particular between the extension, the threads, the cylindrical portion and the projection.

In this embodiment it is preferred that the body is screwed onto the socket until the extension engages the projection and/or the sealing element is deformed.

In addition it is proposed with the invention that the threads are deformed substantially along at least one inner perimeter of the unit and/or by forming at least one dimple, preferably a plurality of dimples, into the material of both the socket and the body in the region of their threads.

It is also proposed with the invention that the threads are deformed by pressing material of the socket and the body in the region of their threads from the outside of the unit onto at least one deformation element insertable into the unit.

In this respect it is further proposed that step a2) further comprises:
a2.1) inserting the deformation element into the unit, in particular into the socket, preferably moving the deformation element until it engages the internal surface of the socket opposite the external thread thereof,
a2.2) applying a pressing action to the outside of the unit opposite the deformation element to force the unit, in particular the material in the region of the threads, onto the deformation element,
a2.3) relieving the pressing action, and
a2.4.) retracting the deformation element out of the unit.

It is preferred that step a2.2) is repeated after displacing, in particular rotating, the deformation element relative to the unit in order to form a plurality of deformations, in particular for forming a plurality of dimples, into the threads.

In another aspect of the invention the same is characterized in that a stop member for the tube, in particular in form of a region of reduced internal diameter of the socket, is provided on the inner surface of the socket, preferably axially between the projection and the thread.

According to the invention it is preferred that the thickness of the socket is reduced in the area of its thread in order to facilitate the deformation thereof, in particular by forming the socket with an enhanced internal diameter, preferably from the free end thereof until the stop member.

Still further, the invention refers to a press connection arrangement produced by a method of the invention, with a body, in particular in form of an elbow, a T-element, an adaptor, a connector, a valve and/or an armature, a socket and a tube of a pipework, the body being provided with a thread in order to be screwed onto a thread of the socket, mating threads of the body and the socket are at least partially deformed after assembling the socket and the body in order to provide an anti-rotational lock, and the socket being provided with an annular bead to house a sealing element, in particular in form of an O-ring, and being pressed onto the tube in the area of the bead for a fluid tight connection.

One embodiment of the invention is characterized by a sealing element, in particular in form of an O-ring, being arranged and/or deformed between the socket and the body, preferably in a space defined between the threads, a substantially axially extending extension of the body, a substantially radially projecting projection of the socket and a substantially cylindrical portion in particular with enhanced external diameter, of the socket, the projection and the extension most preferably engaging each other.

In yet another aspect of the invention a stop member, in particular in form of a region with reduced internal diameter, provided on the internal surface of the socket for the tube to be inserted into the socket, the stop member preferably being provided between the projection and the thread is proposed.

It is preferred that the end of the socket to be connected to the body is provided with the thread, in particular in form of an external thread, said end preferably having a reduced thickness and/or enhanced internal diameter.

In addition it is proposed that the material of the socket is partially pressed into the material of the body in the region of the threads, in particular in form of at least one dimple.

Finally, it is proposed with the invention that a plurality of dimples is provided, preferably arranged along at least one inner perimeter of the socket, most preferably the dimples being displaced around substantially 90° relative to each other.

It is the astonishing perception of the invention that the socket and the body can be connected via a simple screwing connection to form a unit with a subsequent unscrewing of the unit being prevented by deforming material of the socket and the body in the region of the threads of the screwing connection at least partially, in particular in form of dimples, to create an anti-rotational lock.

The invention, together with further objects and advantages, may be best understood, by example, with reference to the following description of one embodiment taken together with the accompanying schematic drawings, in which
- figure 1: is an exploded view of three sockets to be connected to one body of a press connection arrangement of the invention;
- figure 2: is a partial cross sectional view of a socket assembled with a body shown in fig. 1;
- figure 3: is a partial cross sectional view of a socket and a body prior to assembly;
- figure 4: is an enlarged partial cross sectional view of a unit of a socket and a body;
- figure 5: is a perspective view of a deformation element and an unit provided by a body and a socket;
- figure 6: is a partial cross sectional view of the deformation tool and the unit shown in figure 5 in cooperation with a pressing tool to deform said unit;
- figure 7: is a partial cross sectional view of the body and the socket after deformation thereof; and
- figure 8: is a partial cross sectional view of a press connection arrangement of the invention after assembly.

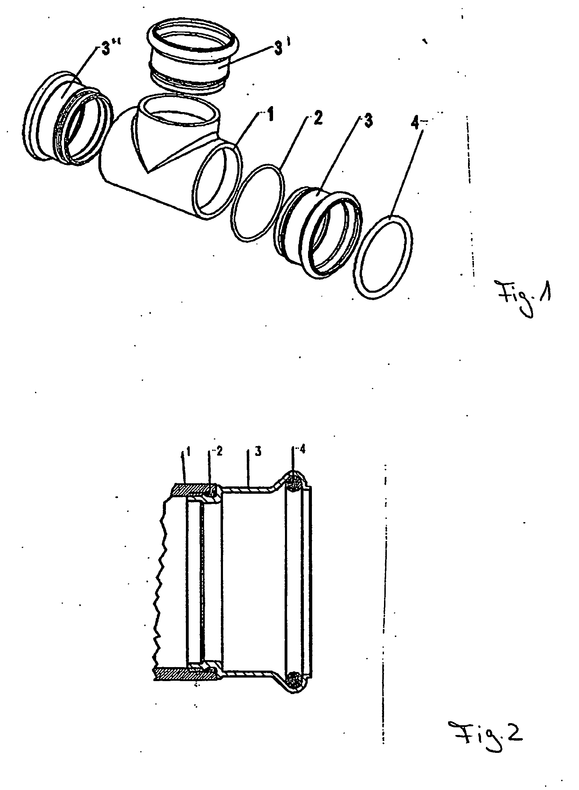

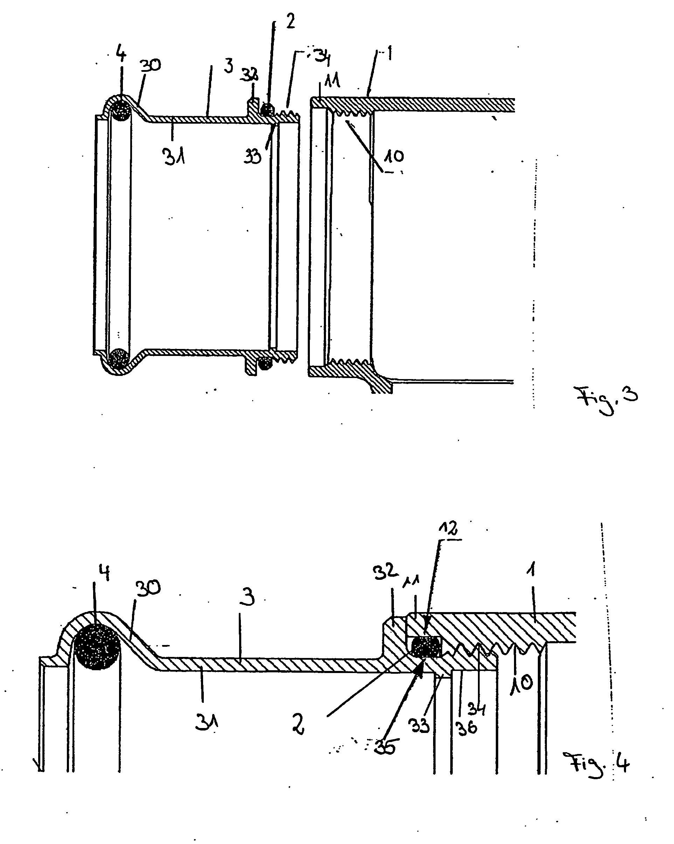

According to fig. 1 a press connection arrangement of the invention comprises a body 1 in form of a T-element to be connected to three sockets 3, 3', 3", one of the sockets, namely socket 3, being connectable at one of its ends to the body 1 after fitting a sealing element 2 in form of an O-ring and pressable at its other end on a tube, not shown, after fitting a further sealing element 4 in form of an O-ring. A respective connection of the body 1 and the socket 3 with both sealing elements 2, 4 is shown in figure 2.

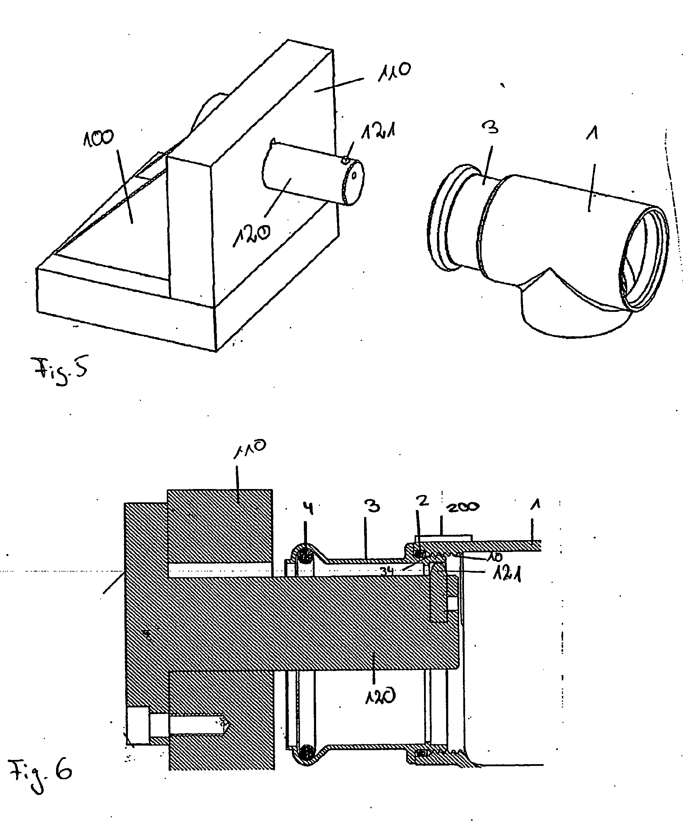

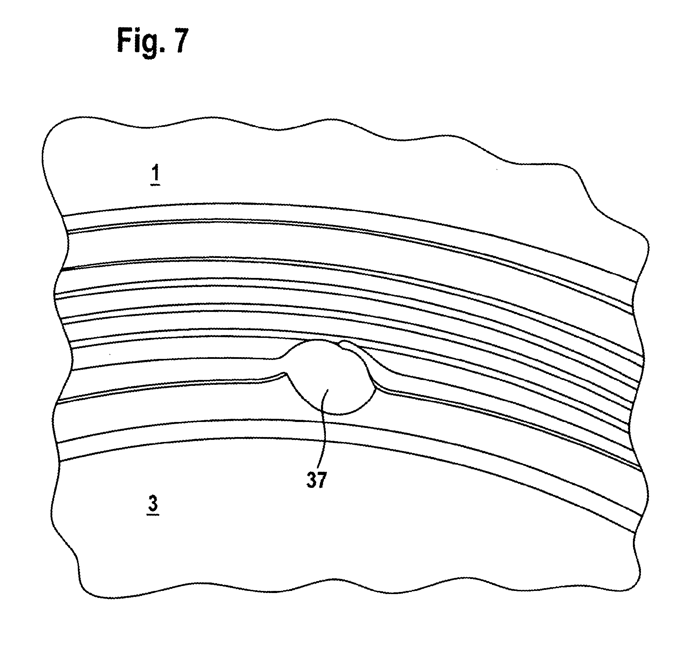

In line with figures 3 and 4 the socket 3 is casted from a tube like bar made in particular out of red brass and subsequently machined externally as well internally to provide an annular bead 30, a cylindrical portion 31, a substantially radially extending projection 32, an internal stop member 33 as well as an external thread 34. A further cylindrical portion with enhanced external diameter 35 is provided between the projection 32 and the external thread 34 at the end of the socket 3 to be connected to the body 1, and said end has an enhanced internal diameter 36. Within the annular bead 30 the sealing element 4 to be arranged between the socket 3 and the non-shown tube is housed, said tube being insertable into the socket 3 until it engages the stop member 33. The body 1 is also produced by casting a substantial tube like bar and than machining the same externally as well as internally in order to obtain a substantially radially extending extension 11 as well as an internal thread 10 at the end of the body 1 to be connected with the socket 3. The sealing element 2 is fitted on the socket 3 in the region of the cylindrical portion with enhanced external diameter 35 such that after screwing the body 1 onto the socket 3 the same is deformed in a space defined by the projection 32, the cylindrical portion with enhanced external diameter 35, the mating threads 10, 34 and the extension 11, the extension 11 engaging the projection 32, as best seen in figure 4.

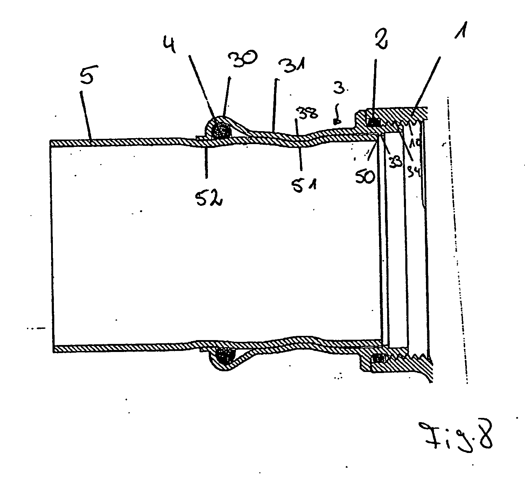

In order to prevent an unscrewing of the mating threads 10, 34 according to the invention material in the region of said threads 10, 34 is partially deformed by making usage of a deformation tool 100 as well as a pressing tool 200 shown in figures 5 and 6. The deformation tool 100 comprises a holding means 110 for a substantially cylindrical bar 120 which is displaceable relative to the holding means 110 along its longitudinal axis and is provided with a substantially radially extending pin 121.

In operation, the socket 3 assembled with the body 1 is loaded onto the bar 120 with its upwardly projecting pin 121. The form of the pin 121 can be of a part of a sphere, whereas other forms are also possible to achieve similar effects, namely deforming the material of the body 1 and the socket 3 in the region of their mating threads 10, 34 between the pin 121 and the pressing tool 200 which can, for example, be a hand-operated press, that is, a dimple 37 is formed within the material of the socket 3 as well as the material of the body 1 leading to a deformation of the mating threads 10, 34 and, thus, providing an anti-rotational lock between the socket 3 and the body 1, as shown in figure 7.

Figure 8 shows a press connection arrangement according to the invention with the body 1 being screwed onto the socket 3, the sealing element 2 being arranged between the body 1 and the socket 3 and the threads 10, 34 being partially deformed (not shown). In addition, a tube 5 is inserted into the unit provided by the body 1 and the socket 3 and engaging the stop member 33 with its free end 50. Further, the socket 3 is pressed onto said end 50 as can be obtained from the indentations 38, 51 and 52 between which the sealing element 4 is housed within the bead 30, in order to provide a fluid tight seal.

## Claims

1. Method for producing a press connection arrangement, comprising the steps of:
a) connecting a body, which is suited for conditioning a fluid flow within a pipework by re-directing, shutting-off and/or accelerating at least a part of said fluid flow or for providing an adaptation between diameters of different pipework elements, to a socket to form a unit of the body and the socket,
b) inserting the end of a tube into at least a part of the unit and
c) press-connecting the socket onto the tube in the area of a bead provided by the socket to house a sealing element between the socket and the tube under the formation of indentations to obtain a press connection arrangement being fluid tight,
**characterized in that**
step a) further comprises:
a1) screwing a thread of the body onto a thread of the socket and
a2) at least partially deforming the mating threads to create an anti-rotational lock.

2. Method according to claim 1, **characterized in that**
the body and the socket are casted and than machined internally as well as externally.

3. Method according to claim 1 or 2, **characterized in that**
the threads are machined, in particular the thread of the body being machined on an inner surface of the body and the thread of the socket being machined on an outer surface of the socket.

4. Method according to one of the preceding claims, **characterized in that**
the free end of the body to be screwed onto the socket is formed with an extension of enhanced internal diameter and adjacent to the extension, extending substantially axially, the thread of the body is formed as an internal thread,
the free end of the socket to be screwed into the body is formed with the thread as an external thread and adjacent to the external thread a substantial cylindrical portion, preferably provided with an enhanced external diameter, is bordered by a projection extending substantially radially, and
a sealing element, in particular in form of an O-ring, is fitted, preferably onto the cylindrical portion of the socket, prior to the assembly of the body and the socket such that after screwing the body onto the socket the sealing element creates seal between the body and the socket, in particular between the extension, the threads, the cylindrical portion and the projection.

5. Method according to claim 4, **characterized in that**
the body is screwed onto the socket until the extension engages the projection and/or the sealing element is deformed.

6. Method according to one of the preceding claims, **characterized in that**
the threads are deformed substantially along at least one inner perimeter of the unit and/or by forming at least one dimple, preferably a plurality of dimples, into the material of both the socket and the body in the region of their threads.

7. Method according to one of the preceding claims, **characterized in that**
the threads are deformed by pressing material of the socket and the body in the region of their threads from the outside of the unit onto at least one deformation element insertable into the unit.

8. Method according to claim 7, **characterized in that**
step a2) further comprises:
a2.1) inserting the deformation element into the unit, in particular into the socket, preferably moving the deformation element until it engages the internal surface of the socket opposite the external thread thereof,
a2.2) applying a pressing action to the outside of the unit opposite the deformation element to force the unit, in particular the material in the region of the threads, onto the deformation element,
a2.3) relieving the pressing action, and
a2.4.) retracting the deformation element out of the unit.

9. Method according to claim 8, **characterized in that**
step a 2.2) is repeated after displacing, in particular rotating, the deformation element relative to the unit in order to form a plurality of deformations, in particular for forming a plurality of dimples, into the threads.

10. Method according to one of the preceding claims, **characterized in that**
a stop member for the tube, in particular in form of a region of reduced internal diameter of the socket, is provided on the inner surface of the socket, preferably axially between the projection and the thread.

11. Method according to one of the preceding claims, **characterized in that**
the thickness of the socket is reduced in the area of its thread in order to facilitate the deformation thereof, in particular by forming the socket with an enhanced internal diameter, preferably from the free end thereof until the stop member.

12. Press connection arrangement produced by a method according to one of the claims 1 to 11, with
a body (1), in particular in form of an elbow, a T-element, an adaptor, a connector, a valve and/or an armature, a socket (3, 3', 3") and a tube (5) of a pipework, the body (1) being provided with a thread (10) in order to be screwed onto a thread (34) of the socket (3), mating threads (10, 34) of the body (1) and the socket (3) are at least partially deformed after assembling the socket (3) and the body (1) in order to provide an anti-rotational lock, and the socket (3) being provided with an annular bead (30) to house a sealing element (4), in particular in form of an O-ring, and being pressed onto the tube (5) in the area of the bead (30) under the formation of indentations (38, 51, 52) for a fluid tight connection.

13. Press connection arrangement according to claim 12, **characterized by**
a sealing element (2), in particular in form of an O-ring, being arranged and/or deformed between the socket (3) and the body (1), preferably in a space defined between the threads (10, 34), a substantially axially extending extension (11) of the body (1), a substantially radially projecting projection (32) of the socket (3) and a substantially cylindrical portion in particular with enhanced external diameter (35), of the socket (3), the projection (32) and the extension (11) most preferably engaging each other.

14. Press connection arrangement according to claim 12 or 13, **characterized by**
a stop member (33), in particular in form of a region with reduced internal diameter, provided on the internal surface of the socket (3) for the tube (5) to be inserted into the socket (3), the stop member (33) preferably being provided between the projection (32) and the thread (34).

15. Press connection arrangement according to one of the claims 12 to 14, **characterized in that**
the end of the socket (3) to be connected to the body (1) is provided with the thread, in particular in form of an external thread (34), said end preferably having a reduced thickness and/or enhanced internal diameter (36).

16. Press connection arrangement according to one of the claims 12 to 15, **characterized in that**
the material of the socket (3) is partially pressed into the material of the body (1) in the region of the threads (34, 10), in particular in form of at least one dimple (37).

17. Press connection arrangement according to claim 16, **characterized in that**
a plurality of dimples (37) is provided, preferably arranged along at least one inner perimeter of the socket (3), most preferably the dimples (37) being displaced around substantially 90° relative to each other.

## Patentansprüche

1. Verfahren zur Herstellung einer Preßverbindungsanordnung, das folgende Schritte umfaßt:
a) Verbinden eines Körpers, der geeignet ist, um einen Fluidstrom in einem Rohrleitungssystem durch Umlenken, Unterbrechen und/oder Beschleunigen zumindest eines Teils des Fluidstroms zu regeln oder um eine Anpassung zwischen Durchmessern verschiedener Elemente des Rohrleitungssystems zu bewirken, mit einer Muffe, um eine Einheit aus dem Körper und der Muffe auszubilden,
b) Einführen des Endes eines Rohrs in zumindest einen Teil der Einheit und
c) Preßverbinden der Muffe mit dem Rohr im Bereich eines an der Muffe vorgesehenen Wulstes zum Aufnehmen eines Dichtungselements zwischen der Muffe und dem Rohr unter Ausbildung von Vertiefungen, um eine fluiddichte Preßverbindungsanordnung zu erhalten,
**dadurch gekennzeichnet, daß**
Schritt a) weiterhin umfaßt:
a1) Schrauben eines Gewindes des Körpers auf ein Gewinde der Muffe und
a2) zumindest teilweises Verformen der ineinandergreifenden Gewinde, um eine verdrehungssichere Arretierung zu bewirken.

2. Verfahren nach Anspruch 1, **dadurch gekennzeichnet, daß**
der Körper und die Muffe gegossen und anschließend sowohl innen als auch außen maschinell bearbeitet werden.

3. Verfahren nach Anspruch 1 oder 2, **dadurch gekennzeichnet, daß**
die Gewinde maschinell erzeugt werden, wobei insbesondere das Gewinde des Körpers auf einer Innenfläche des Körpers maschinell erzeugt wird und das Gewinde der Muffe auf einer Außenfläche der Muffe maschinell erzeugt wird.

4. Verfahren nach einem der vorangehenden Ansprüche, **dadurch gekennzeichnet, daß**
das freie Ende des Körpers, das auf die Muffe geschraubt wird, mit einer Verlängerung mit größerem Innendurchmesser ausgebildet ist und der Verlängerung benachbart, sich im wesentlichen axial erstreckend, das Gewinde des Körpers als Innengewinde ausgebildet ist,
das freie Ende der Muffe, das in den Körper geschraubt wird, mit dem Gewinde als Außengewinde ausgebildet ist und dem Außengewinde benachbart ein im wesentlichen zylindrischer Abschnitt, der bevorzugt mit einem größeren Außendurchmesser versehen ist, durch einen Vorsprung begrenzt wird, die sich im wesentlichen radial erstreckt, und
ein Dichtungselement, insbesondere in Form eines O-Rings, vor dem Zusammenbau des Körpers und der Muffe bevorzugt auf den zylindrischen Abschnitt der Muffe aufgebracht wird, so daß das Dichtungselement nach dem Schrauben des Körpers auf die Muffe eine Abdichtung zwischen dem Körper und der Muffe, insbesondere zwischen der Verlängerung, den Gewinden, dem zylindrischen Abschnitt und dem Vorsprung, bewirkt.

5. Verfahren nach Anspruch 4, **dadurch gekennzeichnet, daß**
der Körper auf die Muffe geschraubt wird, bis sich die Verlängerung im Eingriff mit dem Vorsprung befindet und/oder das Dichtungselement verformt wird.

6. Verfahren nach einem der vorangehenden Ansprüche, **dadurch gekennzeichnet, daß**
die Gewinde im wesentlichen entlang zumindest eines Innenumfangs der Einheit und/oder durch Ausbilden zumindest eines Grübchens, bevorzugt einer Mehrzahl von Grübchen, sowohl im Material der Muffe als auch in dem des Körpers im Bereich ihrer Gewinde verformt werden.

7. Verfahren nach einem der vorangehenden Ansprüche, **dadurch gekennzeichnet, daß**
die Gewinde durch Pressen von Material der Muffe und des Körpers im Bereich ihrer Gewinde von der Außenseite der Einheit auf zumindest ein in die Einheit einführbares Verformungselement verformt werden.

8. Verfahren nach Anspruch 7, **dadurch gekennzeichnet, daß**
Schritt a2) weiterhin umfaßt:
a2.1) Einführen des Verformungselements in die Einheit, insbesondere in die Muffe, wobei das Verformungselement bevorzugt bewegt wird, bis es sich im Eingriff mit der Innenfläche der Muffe gegenüber dem Außengewinde derselben befindet,
a2.2) Ausüben einer Preßhandlung auf die Außenseite der Einheit gegenüber dem Verformungselement, um die Einheit, insbesondere das Material im Bereich der Gewinde, auf das Verformungselement zu drücken,
a2.3) Einstellen der Preßhandlung, und
a2.4) Entfernen des Verformungselements aus der Einheit.

9. Verfahren nach Anspruch 8, **dadurch gekennzeichnet, daß**
Schritt a2.2) wiederholt wird, nachdem das Verformungselements bezogen auf die Einheit anders angeordnet, insbesondere gedreht, wurde, um eine Mehrzahl von Verformungen, insbesondere eine Mehrzahl von Grübchen, in den Gewinden auszubilden.

10. Verfahren nach einem der vorangehenden Ansprüche, **dadurch gekennzeichnet, daß**
ein Stopelement für das Rohr, insbesondere in Form eines Bereichs der Muffe mit vermindertem Innendurchmesser, auf der Innenfläche der Muffe vorgesehen ist, bevorzugt axial zwischen dem Vorsprung und dem Gewinde.

11. Verfahren nach einem der vorangehenden Ansprüche, **dadurch gekennzeichnet, daß**
die Dicke der Muffe im Bereich ihres Gewindes vermindert ist, um die Verformung derselben zu ermöglichen, insbesondere durch Ausbilden der Muffe mit einem größeren Innendurchmesser, bevorzugt vom freien Ende derselben bis zu dem Stopelement.

12. Preßverbindungsanordnung, hergestellt mittels eines Verfahrens nach einem der Ansprüche 1 bis 11 mit
einem Körper (1), insbesondere in Form eines Knies, eines T-Elements, eines Adapters, eines Verbindungsstücks, eines Ventils und/oder einer Armatur, einer Muffe (3, 3', 3") und einem Rohr (5) eines Rohrleitungssystems, wobei der Körper (1) mit einem Gewinde (10) versehen ist, um auf ein Gewinde (34) der Muffe (3) geschraubt zu werden, ineinandergreifende Gewinde (10, 34) des Körpers (1) und der Muffe (3) nach dem Zusammenbauen der Muffe (3) und des Körpers (1) zumindest teilweise verformt werden, um eine verdrehungssichere Arretierung zu bewirken, und wobei die Muffe (3) mit einem ringförmigen Wulst (30) zum Aufnehmen eines Dichtungselements (4), insbesondere in Form eines O-Rings, versehen ist und im Bereich des Wulstes (30) unter Ausbildung von Vertiefungen (38, 51, 52) für eine fluiddichte Verbindung auf das Rohr (5) gepreßt wird.

13. Preßverbindungsanordnung nach Anspruch 12, **gekennzeichnet durch**
ein Dichtungselement (2), insbesondere in Form eines O-Rings, das zwischen der Muffe (3) und dem Körper (1) angeordnet ist und/oder verformt wird, bevorzugt in einem Raum, der zwischen den Gewinden (10, 34) begrenzt ist, eine sich im wesentlichen axial erstreckende Verlängerung (11) des Körpers (1), einen im wesentlichen radial vorspringenden Vorsprung (32) der Muffe (3) und einen im wesentlichen zylindrischen Abschnitt, insbesondere mit größerem Außendurchmesser (35), der Muffe (3), wobei am meisten bevorzugt ist, daß sich der Vorsprung (32) und die Verlängerung (11) im Eingriff miteinander befinden.

14. Preßverbindungsanordnung nach Anspruch 12 oder 13, **gekennzeichnet durch**
ein Stopelement (33), insbesondere in Form eines Bereichs mit vermindertem Innendurchmesser, der auf der Innenfläche der Muffe (3) vorgesehen ist, um das Rohr (5) in die Muffe (3) einzuführen, wobei das Stopelement (33) bevorzugt zwischen dem Vorsprung (32) und dem Gewinde (34) vorgesehen ist.

15. Preßverbindungsanordnung nach einem der Ansprüche 12 bis 14, **dadurch gekennzeichnet, daß**
das Ende der Muffe (3), das mit dem Körper (1) verbunden wird, mit dem Gewinde, insbesondere in Form eines Außengewindes (34), versehen ist, wobei das Ende bevorzugt eine verminderte Dicke und/oder einen größeren Innendurchmesser (36) aufweist.

16. Preßverbindungsanordnung nach einem der Ansprüche 12 bis 15, **dadurch gekennzeichnet, daß**
das Material der Muffe (3) im Bereich der Gewinde (34, 10) teilweise in das Material des Körpers (1) gepreßt wird, insbesondere in Form zumindest eines Grübchens (37).

17. Preßverbindungsanordnung nach Anspruch 16, **dadurch gekennzeichnet, daß**
eine Mehrzahl von Grübchen (37) vorgesehen ist, die bevorzugt entlang zumindest eines Innenumfangs der Muffe (3) angeordnet sind, wobei am meisten bevorzugt ist, daß die Grübchen (37) um im wesentlichen 90° gegeneinander versetzt sind.

## Revendications

1. Procédé de production d'un raccord à sertir, comprenant les étapes consistant à :
a) connecter un corps, qui est approprié pour conditionner un écoulement de fluide à l'intérieur d'une canalisation en redirigeant, coupant et/ou accélérant au moins une partie dudit écoulement de fluide ou pour permettre une adaptation entre des diamètres de différents éléments de canalisation, à une emboîture pour former une unité du corps et de l'emboîture,
b) insérer l'extrémité d'un tube dans au moins une partie de l'unité et
c) sertir l'emboîture sur le tube dans la zone d'une nervure prévue par l'emboîture pour loger un élément d'étanchéité entre l'emboîture et le tube sous la formation de dentelures pour obtenir un raccord à sertir étant étanche,
**caractérisé en ce que**
l'étape a) comprend en outre :
a1) le vissage d'un filet du corps sur un filet de l'emboîture et
a2) la déformation au moins partielle des filets correspondants pour créer un blocage anti-rotation.

2. Procédé selon la revendication 1, **caractérisé en ce que**
le corps et l'emboîture sont coulés puis usinés de manière interne et externe.

3. Procédé selon la revendication 1 ou 2, **caractérisé en ce que**
les filets sont usinés, en particulier le filet du corps étant usiné sur une surface intérieure du corps et le filet de l'emboîture étant usiné sur une surface extérieure de l'emboîture.

4. Procédé selon l'une quelconque des revendications précédentes, **caractérisé en ce que**
l'extrémité libre du corps devant être vissée sur l'emboîture est formée avec une extension du diamètre interne agrandi et de manière adjacente à l'extension, s'étendant sensiblement axialement, le filet du corps est formé sous la forme d'un filet interne,
l'extrémité libre de l'emboîture devant être vissée dans le corps est formée avec le filet sous la forme d'un filet externe et de manière adjacente au filet externe une partie sensiblement cylindrique, de préférence munie d'un diamètre externe agrandi, est bordée par une saillie s'étendant sensiblement radialement, et
un élément d'étanchéité, en particulier sous la forme d'un joint torique, est ajusté, de préférence sur la partie cylindrique de l'emboîture, avant l'assemblage du corps et de l'emboîture de telle sorte qu'après le vissage du corps sur l'emboîture, l'élément d'étanchéité crée un joint entre le corps et l'emboîture, en particulier entre l'extension, les filets, la partie cylindrique et la saillie.

5. Procédé selon la revendication 4, **caractérisé en ce que**
le corps est vissé sur l'emboîture jusqu'à ce que l'extension mette en prise la saillie et/ou que l'élément d'étanchéité soit déformé.

6. Procédé selon l'une quelconque des revendications précédentes, **caractérisé en ce que**
les filets sont déformés sensiblement le long d'au moins un périmètre intérieur de l'unité et/ou en formant au moins une empreinte, de préférence une pluralité d'empreintes, dans le matériau à la fois de l'emboîture et du corps dans la zone de leurs filets.

7. Procédé selon l'une quelconque des revendications précédentes, **caractérisé en ce que**
les filets sont déformés en pressant le matériau de l'emboîture et du corps dans la zone de leurs filets depuis l'extérieur de l'unité sur au moins un élément de déformation insérable dans l'unité.

8. Procédé selon la revendication 7, **caractérisé en ce que**
l'étape a2) comprend en outre :
a2.1) l'insertion de l'élément de déformation dans l'unité, en particulier dans l'emboîture, de préférence en déplaçant l'élément de déformation jusqu'à ce qu'il mette en prise la surface interne de l'emboîture en regard du filet externe de celle-ci,
a2.2) l'application d'une action de pression sur l'extérieur de l'unité en regard de l'élément de déformation pour pousser l'unité, en particulier le matériau dans la zone des filets, sur l'élément de déformation,
a2.3) le relâchement de l'action de pression, et
a2.4) la rétraction de l'élément de déformation hors de l'unité.

9. Procédé selon la revendication 8, **caractérisé en ce que**
l'étape a2.2) est répétée après le déplacement, en particulier la rotation, de l'élément de déformation par rapport à l'unité afin de former une pluralité de déformations, en particulier pour former une pluralité d'empreintes, dans les filets.

10. Procédé selon l'une quelconque des revendications précédentes, **caractérisé en ce que**
un élément d'arrêt pour le tube, en particulier sous la forme d'une zone de diamètre interne réduit de l'emboîture, est prévu sur la surface intérieure de l'emboîture, de préférence axialement entre la saillie et le filet.

11. Procédé selon l'une quelconque des revendications précédentes, **caractérisé en ce que**
l'épaisseur de l'emboîture est réduite dans la zone de son filet afin de faciliter la déformation de celle-ci, en particulier en formant l'emboîture avec un diamètre interne agrandi, de préférence depuis l'extrémité libre de celle-ci jusqu'à l'élément d'arrêt.

12. Raccord à sertir produit par un procédé selon l'une quelconque des revendications 1 à 11, possédant
un corps (1), en particulier sous la forme d'un coude, un élément en T, un adaptateur, un connecteur, une soupape et/ou une armature, une emboîture (3, 3', 3") et un tube (5) d'une canalisation, le corps (1) étant muni d'un filet (10) destiné à être vissé sur un filet (34) de l'emboîture (3), les filets correspondants (10, 34) du corps (1) et de l'emboîture (3) sont au moins partiellement déformés après assemblage de l'emboîture (3) et du corps (1) afin de fournir un blocage anti-rotation, et l'emboîture (3) étant munie d'une nervure annulaire (30) pour loger un élément d'étanchéité (4), en particulier sous la forme d'un joint torique, et étant pressée sur le tube (5) dans la zone de la nervure (30) sous la formation de dentelures (38, 51, 52) pour une connexion étanche.

13. Raccord à sertir selon la revendication 12, **caractérisé par**
un élément d'étanchéité (2), en particulier sous la forme d'un joint torique, étant arrangé et/ou déformé entre l'emboîture (3) et le corps (1), de préférence dans un espace défini entre les filets (10, 34), une extension s'étendant sensiblement axialement (11) du corps (1), une saillie faisant saillie sensiblement radialement (32) de l'emboîture (3) et une partie sensiblement cylindrique en particulier avec un diamètre externe agrandi (35), de l'emboîture (3), la saillie (32) et l'extension (11) venant de préférence en prise l'une avec l'autre.

14. Raccord à sertir selon la revendication 12 ou 13, **caractérisé par**
un élément d'arrêt (33), en particulier sous la forme d'une zone de diamètre interne réduit, prévu sur la surface interne de l'emboîture (3) pour le tube (5) devant être inséré dans l'emboîture (3), l'élément d'arrêt (33) étant de préférence prévu entre la saillie (32) et le filet (34).

15. Raccord à sertir selon l'une quelconque des revendications 12 à 14, **caractérisé en ce que**
l'extrémité de l'emboîture (3) devant être connectée au corps (1) est munie du filet, en particulier sous la forme d'un filet externe (34), ladite extrémité ayant de préférence une épaisseur réduite et/ou un diamètre interne agrandi (36).

16. Raccord à sertir selon l'une quelconque des revendications 12 à 15, **caractérisé en ce que**
le matériau de l'emboîture (3) est partiellement pressé dans le matériau du corps (1) dans la zone des nervures (34, 10), en particulier sous la forme d'au moins une empreinte (37).

17. Raccord à sertir selon la revendication 16, **caractérisé en ce que**
une pluralité d'empreintes (37) sont prévues, de préférence arrangées le long d'au moins un périmètre interne de l'emboîture (3), plus préférablement les empreintes (37) étant déplacées à sensiblement 90° les unes par rapport aux autres.
